# FASCICULE DE BREVET EUROPEEN

(11) **EP 0 410 892 B1**
(45) Date de publication et mention de la délivrance du brevet: **08.06.1994**
(21) Numéro de dépôt: 90402159.9
(22) Date de dépôt: 26.07.1990
(51) Int. Cl.: H04N 15/00, H04N 7/08

(54) **Procédé de traitement et de transmission par un canal comportant une voie analogique et une voie numérique d'une séquence de couples d'images de télévision stéréoscopique**
Verfahren zur Behandlung und zur Übertragung einer Folge von stereoskopischen Fernsehbilpaaren durch einen Kanal, der einen analogen und einen digitalen Weg enthält
Method for processing and transmitting a sequence of stereoscopic television image couples through a channel including an analogic and a digital path

(30) Priorité: 26.07.1989 FR 8910063
(43) Date de publication de la demande: 30.01.1991
(73) Titulaire: FRANCE TELECOM, 75015 Paris (FR); Etablissement Public Télédiffusion de France, 75015 Paris (FR)
(72) Inventeur: Choquet, Bruno, F-35000 Rennes (FR); Pele, Danièle, F-35000 Rennes (FR); Chassaing, Françoise, F-35520 La chapelle des Fougeretz (FR)
(74) Mandataire: Rodhain, Claude

(56) Documents cités:
- WO-A-84/00865
- GB-A- 2 131 645
- GB-A- 2 174 266
- US-A- 3 991 266
- FERNSEH- UND KINO-TECHNIK, vol. 42, no. 2, février 1988, pages 67-73, Heidelberg, DE; B. KOST: "Konstruktion von Zwischenansichten für Multi-Viewpoint-3DTV-Systeme"
- IEEE TRANSACTIONS ON CONSUMER ELECTRONICS, vol. CE-31, no. 2, mai 1985, pages 82-87, IEEE, New York, US; P. PRABHAKARA et al.: "A compatible and economical 3D-TV system"

## Description

Le domaine de l'invention est celui des systèmes de télévisions en relief ou stéréoscopiques. Plus particulièrement, l'invention concerne un nouveau procédé de traitement et de transmission de séquences d'images stéréoscopiques dans un canal de transmission de données permettant à l'extrémité de la chaîne de transmission, de reconstituer soit une image compatible pour téléviseur conventionnel, soit une image stéréoscopique pour téléviseur stéréoscopique.

Un système de télévision stéréoscopique a pour but de restituer sur un écran de petites dimensions, comparativement à un écran cinématographique, la sensation du relief, c'est-à-dire permettant au téléspectateur de ressentir l'effet de profondeur des points observés de la scène réelle.

L'invention s'intègre dans l'environnement existant des systèmes de télévisions stéréoscopiques et respecte les spécificités de la norme de transmission "MAC" ou Multiplex Analogique en Composantes utilisées en radiodiffusion directe par satellite.

On connaît déjà des procédés de tansmission de séquences d'images dans un canal de transmission comportant une voie vidéo analogique associée à une voie numérique du type "MAC". L'analyse de la scène réelle est réalisée par deux caméras synchronisées délivrant une vue droite et une vue gauche de la scène observée.

Selon ces procédés connus de transmission de séquences d'images, on transmet par la voie vidéo analogique du canal de transmission les séquences d'images correspondant toujours à une seule vue, la droite ou la gauche, et par la voie numérique associée, des données complémentaires sous forme de carte de vecteurs de correspondance, ces données complémentaires permettant de reconstruire localement, au niveau du téléviseur stéréoscopique, la vue non transmise à partir de la vue transmise pour la visualisation en relief.

Ce procédé favorise l'image compatible, c'est à dire qu'un téléviseur conventionnel peut facilement en ignorant les données complémentaires transmises, restituer les séquences d'images correspondant à une des vues sans dégradation de l'image plane restituée.

Un inconvénient majeur de ces procédés réside dans le fait que l'image stéréoscopique restituée sur un téléviseur stéréoscopique à partir de ces informations, est fortement dégradée en particulier dans les zones d'images "non prédictibles" par exemple si la face d'un objet visible sur une vue ne l'est pas sur l'autre vue. Par ailleurs, ces défauts sont amplifiés lorsque la carte de vecteurs de correspondance n'est pas assez précise ou est sensible aux erreurs de transmission.

L'article "Fernseh- und Kino-Technik" vol. 42 n°2 ; Fev. 1988 - p.67-73 (Heidelberg B. Kost) intitulé "Konstruktion von Zwischenansichten für Multi-Viewpoint-3DTV-Systeme" évoque le problème que posent les zones non communes aux deux vues d'une image stéréoscopique, et propose à cet effet une méthode de calcul de corrélation.

L'état de l'art ne permet pas de pallier à ces différents problèmes et notamment il n'existe pas de procédés de traitement de données susceptibles de supprimer ces cas critiques ou du moins en atténuer la visibilité sur l'image stéréoscopique reconstituée.

En conséquence, l'objectif de l'invention est de proposer un nouveau procédé de traitement et transmission d'images stéréoscopiques dans un canal du type comportant une voie vidéo analogique associée à une voie numérique permettant la reconstitution d'une image stéréoscopique d'une qualité satisfaisante sans pour autant dégrader l'image compatible.

Encore un autre objectif de l'invention est de proposer un nouveau procédé de traitement et de transmission d'images stéréoscopiques s'adaptant au contenu local ou global des images stéréoscopiques et à leur activité spatio-temporelle tant pour une visualisation simultanée que pour une visualisation alternée des vues stéréoscopiques.

Ces objectifs sont atteints à l'aide d'un procédé de traitement et de transmission par un canal du type comportant notamment une voie vidéo analogique associée à une voie numérique, d'une séquence de couples d'images de télévision stéréoscopiques, permettant de restituer à l'extrémité de la chaîne de transmission, une image compatible ou une image en relief, tel que défini dans la revendication 1.

Ainsi, grâce au fait que les informations transmises intègrent à la fois des informations des images droites et gauches des couples d'images stéréoscopiques, l'image stéréoscopique restituée ne souffre pas du défaut introduit par les zones non communes aux deux voies contrairement à l'art antérieur. On notera cependant, que ce défaut est reporté sur l'image compatible. Cependant, la dégradation de l'image compatible reste moins gênante que la dégradation de l'image stéréoscopique obtenue dans l'art antérieur, car dans le premier cas, il s'agit d'une image plane.

Lesdites images droites et gauches appartiennent respectivement au même couple d'images ou à deux couples d'images se succédant dans la séquence.

La mise en correspondance des éléments d'images permet de décaler au niveau d'un codeur ou de recaler au niveau d'un décodeur les éléments d'images transmis en transmettant parallèlement au signal d'image vidéo compatible, par la voie numérique du canal de transmission, une carte de vecteur de correspondance. Le décalage des éléments d'images d'une image par rapport à une autre, assure quant à lui, la compatibilité visuelle pour l'image compatible vidéo transmise.

Selon une autre caractéristique de l'invention, le multiplexage des éléments d'images des images des couples d'images de la séquence, est auto-adaptatif à la quantité de mouvement du contenu local ou global du couple d'images courant.

De cette manière, on permet de favoriser soit la résolution spatiale, soit la résolution temporelle, suivant la quantité de mouvement du contenu local ou global du couple d'images courant à transmettre. Les images ou parties d'image non transmises, sont reconstituées par filtrage linéaire ou par compensation de mouvement (les informations de mouvement sont calculées dans le codeur et transmises, après réduction de débit, par exemple par segmentation, au décodeur qui assure la reconstruction).

D'autres caractéristiques et avantages de l'invention apparaîtront à la lecture de la description suivante d'un mode de réalisation préférentiel et des dessins annexés dans lesquels :
- la figure 1 représente un schéma général du procédé selon l'invention,
- les figures 2A à 2F sont une représentation schématique des trames de la séquence de couples d'images stéréoscopiques de l'analyse, des trames de la séquence d'images vidéo compatible transmises et des trames de la séquence d'images stéréoscopiques restituée en mode alterné ou simultané.

De façon connue, les systèmes de télévision stéréoscopique utilisent pour l'analyse un ensemble de deux caméras vidéo montées sur un support mécanique permettant la gestion de la base stéréoscopique, des distances focales, des plans et angles de convergence, etc... Chaque caméra délivre, respectivement, une vue gauche et une vue droite, les deux vues étant transmises à des récepteurs de télévision compatibles ou en relief selon un mode de transmission du type "MAC", par exemple. On distingue deux modes de visualisation en relief, à savoir la visualisation simultanée et la visualisation alternée. Dans le cas d'une visualisation alternée, les téléviseurs stéréoscopiques fonctionnent avec des fréquences temporelles élevées, par exemple, 100 Hz. La visualisation en relief est obtenue grâce à des lunettes passives par polarisation par écran actif appliqué sur le téléviseur ou grâce à des lunettes actives du type à céramique transparente à base de titane de zirconium dopé au plomb et au lanthane ou des lunettes de type à cristaux liquides.

La visualisation simultanée requiert pour le récepteur stéréoscopique deux tubes de projection indépendants, un tube pour chaque vue. On prévoit une optique de polarisation caractérisant chaque vue placée généralement au niveau de l'objectif du projecteur. Les deux vues sont projetées simultanément sur un écran non dépolarisant. Le télespectateur est muni de lunettes polarisées sélectionnant, pour chaque oeil, la vue correspondante. Ces deux techniques de visualisation sont connues de l'homme de l'art.

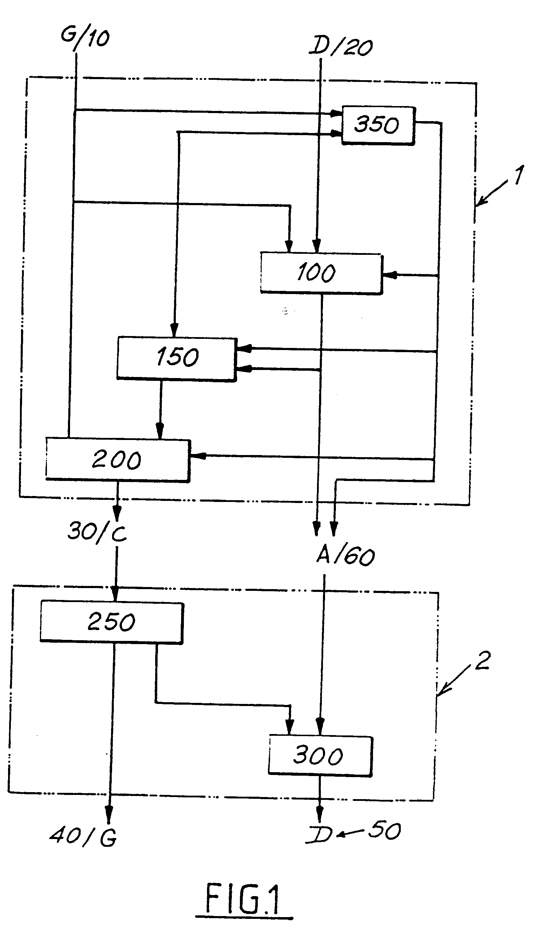

Comme visible en figure 1, on effectue l'analyse par le jeu de deux caméras, délivrant une séquence de couples d'images stéréoscopiques contenant chacun une image gauche G10, et une image droite D20. La séquence de couples d'images est appliquée à l'entrée d'un codeur 1, dans lequel on réalise le prétraitement des images en vue de la transmission, sur la voie vidéo analogique du canal de transmission d'un signal d'image correspondant à une image compatible C30 et de la transmission sur la voie numérique de données d'assistance A60. Le prétraitement de la séquence de couples d'images stéréoscopiques G10, D20, comprend tout d'abord une étape de mise en correspondance 100 entre les éléments d'image d'un image gauche G10 et les éléments d'image d'une image droite D20, permettant la détermination d'une carte de vecteurs de correspondance constituant tout ou partie des données d'assistance A60. Cette étape de mise en correspondance est réalisée par des circuits (non représentés) selon des procédés connus de l'homme de l'art, et peut s'effectuer sur des images droite et gauche appartenant au même couple d'images courant en entrée du codeur 1 mais aussi sur des images droite et gauche appartenant à des couples d'images différent se succédant dans la séquence.

L'étape de mise en correspondance est suivie d'une étape de décalage 150 des éléments d'image dans l'image droite D20 conformément aux éléments d'image de l'image gauche G10 ou réciproquement, l'image droite et l'image gauche pouvant appartenir au même couple d'images stéréoscopiques courant ou à des couples d'images différents se succédant dans la séquence. On multiplexe 200 les éléments d'images des images gauches G10 avec les éléments d'images des images droites D20 décalés, en respect des informations qui sont issues des traitements de mise en correspondance. L'étape de multiplexage, délivre en sortie du codeur 1, un signal d'image vidéo compatible C30 da s lequel on a combiné des éléments de signaux appartenant respectivement aux images gauche et droite du ou des couples d'images stéréoscopiques de la séquence. Le signal d'image vidéo compatible C30 peut ainsi être restitué directement au niveau d'un téléviseur conventionnel. Si le signal d'image vidéo compatible est destiné à un téléviseur stéréoscopique, celui-ci est transmis avec des données d'assistance A60 à un décodeur 2 associé au téléviseur stéréoscopique. A l'entrée du décodeur 2, le signal d'image vidéo compatible est démultiplexé 250 pour fournir une image gauche G40 et une image droite D50 obtenues après une étape de recalage des éléments d'images 300.

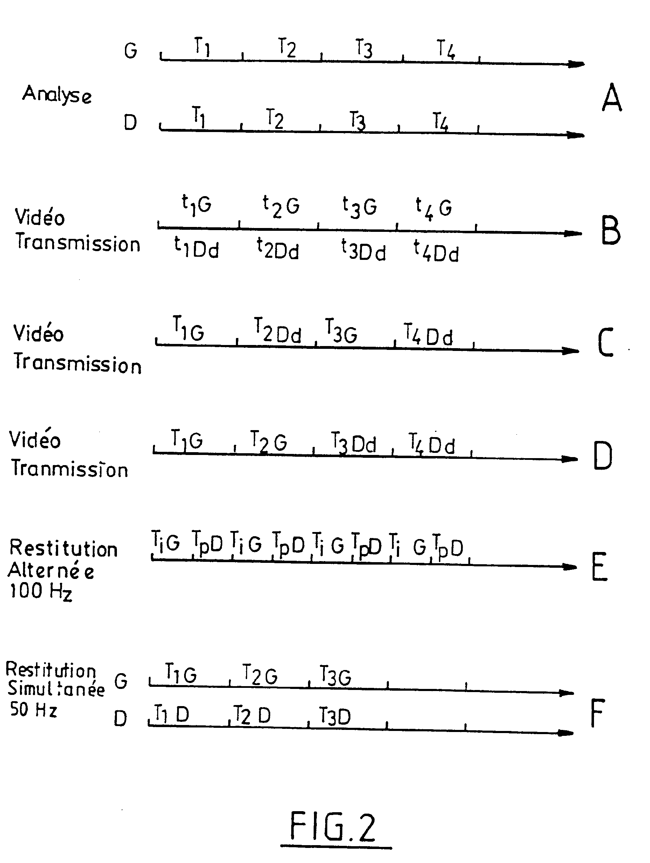

Le procédé selon l'invention prévoit un multiplexage adaptatif des éléments d'images des images droite et gauche selon l'activité spatiotemporelle de du couple d'images courant de la séquence, permettant une stéréovision dynamique. En stéréovision dynamique, l'aspect temporel, notamment par le biais de l'estimation du mouvement ou du suivi des caractéristiques dans chaque séquence d'images, correspondant à la vue droite et à la vue gauche, est pris en compte pour choisir le mode de multiplexage pour la transmission des éléments d'images, figures 2B à 2D, et le cas échéant, assurer la reconstruction des trames non transmises (indépendamment des vues gauche et droite). Le résultat de l'estimation du mouvement est donné par une fonction de sélection discriminant soit un mouvement rapide du couple d'images courant, soit un mouvement faible, soit un mouvement très faible correspondant à un contenu fixe du couple d'images pour au moins deux couples successifs dans la séquence. Comme visible en figure 1, on réalise l'estimation du mouvement 350 pour la séquence de couples d'images courant avant l'étape de mise en correspondance, le résultat de l'estimation étant fourni à l'entrée des étapes de mise en correspondance, décalage et multiplexage.

Le champ des vecteurs mouvement est transmis dans la voie numérique en tant que partie des données d'assistance A60, après réduction de débit par segmentation par exemple.

Dans le cas de la visualisation simultanée (figure 2F), le procédé selon l'invention s'adapte au résultat de l'estimation de mouvement. Ainsi, si le contenu du couple d'images courant de la séquence est reconnu en mouvement rapide, il est préférable de favoriser la résolution temporelle. Le multiplexage des éléments d'images des images droites et des images gauches du couple d'images stéréoscopiques s'effectue par exemple en combinant spatialement, ligne à ligne, une trame d'une image gauche T1G anamorphosée avec une trame d'une image droite T1D anamorphosée et décalée (visible en figure 2A) de sorte constituer une trame composite T1G, T1Dd de l'image vidéo compatible transmise en sortie du codeur 1 comme visible en figure 2B. La résolution spatiale de chaque image, droite et gauche, est réduite par anamorphose, c'est à dire par filtrage et sous-échantillonnage et seule l'image droite anamorphosée est décalée. On prévoit dans le décodeur un traitement par filtre linéaire pour appliquer la fonction inverse de l'anamorphose sur les éléments d'images transmis respectivement après le démultiplexage 250 et le recalage 300, effectués dans le décodeur 2. Par ailleurs, on prévoira avantageusement, un démultiplexage d'informations relatives au champ des vecteurs mouvement préalablement à l'opération de filtrage linéaire au niveau du décodeur 2.

Si le contenu du couple d'images courant de la séquence est reconnu en faible mouvement, on réduit à la fois la résolution temporelle et la résolution spatiale en combinant temporellement une trame impaire T₁G d'une image gauche suivie d'une trame paire T₂Dd décalée d'une image droite, ou réciproquement. Chaque trame successive des images vidéo compatibles transmises correspond donc à l'alternance d'une trame sur deux respectivement, de chaque image droite et gauche des couples d'images de la séquence comme visible en figure 2C, la résolution spatiale des trames transmises n'étant pas réduite. On devra prévoir, par ailleurs, en plus de l'étape de mise en correspondance, des traitements supplémentaires, par exemple l'estimation de mouvement, fournissant les informations nécessaires en tant que données d'assistance pour pouvoir reconstituer par interpolation, au niveau du décodeur 2, les trames non transmises des images droite ou gauche des couples d'images de la séquence.

La figure 2D représente les trames des images vidéo compatibles de la séquence transmise issues du multiplexage des éléments d'images des images droite et gauche des couples d'images stéréoscopiques dans le cas d'un mouvement très faible de leur contenu. Dans ce cas, on préserve la résolution spatiale, c'est à dire que l'on combine temporellement deux trames successives T₁G, T₂G d'une image gauche suivie de deux trames successives T₃Dd, T₄Dd d'une image droite décalée de sorte que deux trames successives d'une image vidéo compatible transmise correspondent alternativement à deux trames successives d'une image droite ou d'une image gauche de couples d'images stéréoscopiques de la séquence. Dans ce cas, on prévoit aussi, comme ci-dessus, des traitements complémentaires permettant, au niveau du décodeur, de reconstituer à partir des données issues de ces traitements supplémentaires et par interpolation, de reconstituer les images manquantes d'une des vues.

Grâce à ce nouveau procédé, on privilégie l'image stéréoscopique en disposant, au niveau du décodeur 2 associé à un téléviseur stéréoscopique, d'éléments d'images appartenant aux deux vues de l'analyse. Les éléments d'images non transmis appartenant aux images correspondant aux vues droite et gauche sont reconstruits grâce aux données d'assistance. L'image stéréoscopique ne souffre pas, selon le procédé de traitement et de transmission de l'invention, des défauts connus de l'art antérieur.

La séquence d'images compatible transmise permet une visualisation plane d'une qualité acceptable, du fait que les susceptibles d'apparaître à la visualisation sur un téléviseur conventionnel sont éliminés en grande partie par des procédés connus de filtrage et de lissage des contours par exemple.

Les modes de réalisation ci-dessus décrits sont compatibles pour un système de télévision stéréoscopique en visualisation alternée, figure 2E. Dans le cas de la visualisation alternée, chaque image gauche restituée correspond toujours à une trame impaire de l'image gauche analysée et chaque image droite restituée correspond à une trame paire de l'image droite analysée. De ce fait, chaque image visualisée est à demi-résolution verticale et des trames intermédiaires devront toujours être interpolées.

Un mode de réalisation particulier de l'invention, permet de simplifier les traitements réalisés au niveau du décodeur 2, notamment les traitements de conversion de fréquence temporelle, dans le cas d'une restitution alternée à 100 Hz étant entendu que l'analyse des vues droite et gauche se fait simultanément et que le procédé de traitement et de transmission de la séquence de couples d'images stéréoscopiques consiste à combiner temporellement une trame impaire d'une image gauche suivie d'une trame paire d'une image droite pour former la séquence d'images vidéo compatible conformément à la figure 2C.

Comme visible en figure 2C, les trames originales T1G, T3G correspondant aux trames impaires des images gauches de la séquence des couples d'images stéréoscopiques sont entièrement transmises. Lors de la restitution en mode alterné à 100 Hz, il est nécessaire de reconstituter les trames impaires T1G intermédiaires, comme visible en figure 2E, correspondant aux trames non transmises des images gauches de la séquence de couple d'images par conversion de fréquence temporelle, le traitement de conversion au niveau du décodeur 2 étant appliqué toutes les deux trames des images gauches restituées. En ce qui concerne les images droites restituées, toutes leurs trames paires TpD correspondantes sont recalculées au niveau du décodeur en leur appliquant en particulier un procédé de disparité et de conversion de fréquence temporelle.

Selon l'invention, on réduit avantageusement la complexité du décodeur 2 en simplifiant les traitements qui lui sont associés. Cette simplification est obtenue en effectuant le calcul des trames paires correspondant aux images droites restituées et notamment la conversion des fréquences temporelles au niveau du codeur 1.

Grâce à ce prétraitement réalisé au niveau du codeur 1, la conversion de fréquence temporelle est appliquée seulement toutes les deux trames paires des images droites de la séquence de couples d'images stéréoscopiques. On réalise ensuite le multiplexage temporel des trames impaires des images gauches avec les trames paires des images droites préalablement converties en fréquence des couples d'images stéréoscopiques pour constituer la séquence d'images vidéo compatible, les opérations de décalage et de recalage étant toujours nécessaires.

Bien entendu, l'invention est aussi compatible avec un système équipé en visualisation d'un réseau lenticulaire. Les adaptations nécessaires supplémentaires consistent essentiellement en l'interpolation de n vues intermédiaires dans le décodeur, à partir de données calculées dans le codeur et qui sont transmises à partir de celui-ci.

## Revendications

1. Procédé de traitement et de transmission d'une séquence de couples d'images droite et gauche (10, 20) de télévision stéréoscopique par un canal de transmission comportant une voie analogique et une voie numérique, pour restituer à l'extrémité dudit canal de transmission une image compatible (30) ou une image en relief (40, 50), caractérisé en ce qu'il comprend :
a) une étape de mise en correspondance (100) des images droite et gauche des couples d'images pour fournir une carte de vecteurs de correspondance formant des données numériques d'assistance,
b) une étape de décalage (150) des éléments d'images dans une image droite, conformément aux éléments d'image de l'image gauche, ou réciproquement, dans une image gauche conformément aux éléments d'image de l'image droite ;
c) une étape de multiplexage (200) des éléments d'images des images droite et gauche obtenues dans l'étape b) pour fournir une image compatible ladite image compatible étant transmise par la voie analogique et les données numériques d'assistance étant transmises par la voie numérique.

2. Procédé selon la revendication 1, caractérisé en ce que le multiplexage des éléments d'images des images du couple d'images est auto-adaptatif à la quantité de mouvement du contenu local ou global du couple d'images.

3. Procédé selon la revendications 2, caractérisé en ce que le multiplexage des éléments d'images des images droite et gauche des couples d'images stéréoscopiques, s'effectue en combinant spatialement, ligne à ligne, une trame d'une image gauche anamorphosée avec une trame d'une image droite anamorphosée de sorte à constituer une trame composite de l'image vidéo compatible transmise.

4. Procédé selon la revendication 2, caractérisé en ce que le multiplexage des éléments d'images des images droite et gauche des couples d'images stéréoscopiques s'effectue en combinant temporellement une trame impaire d'une image gauche suivie d'une trame paire d'une image droite, ou réciproquement, de sorte que chaque trame successive de l'image vidéo compatible transmise correspond à l'alternance d'une trame sur deux respectivement de chaque image droite et gauche des couples d'images de la séquence.

5. Procédé selon la revendication 2, caractérisé en ce que le multiplexage des éléments d'images des images droite et gauche des couples d'images stéréoscopiques s'effectue en combinant temporellement deux trames successives d'une image gauche, suivies de deux trames successives d'une image droite, de sorte que deux trames successives de l'image vidéo compatible transmise correspondent alternativement à deux trames successives d'une image droite ou d'une image gauche de couples d'images stéréoscopiques de la séquence.

6. Procédé selon la revendication 5, caractérisé en ce que préalablement au multiplexage, on effectue un traitement supplémentaire de conversion de fréquence temporelle sur les trames paires des images droites de la séquence de couples d'images stéréoscopiques.

## Patentansprüche

1. Verfahren zur Verarbeitung und zur Übertragung eine Folge von rechten und linken stereoskopischen Fernsehbildpaaren (10, 20) durch einen Übertragungskanal, der einen analogen und einen digitalen Weg enthält, zur Erzeugung eines kompatiblen Bildes (30) oder eines räumlichen Bildes (40, 50) am Ende des Übertragungskanals, dadurch gekennzeichnet, daß es umfaßt:
a) einen Verfahrensschritt der Zuordnung (100) der rechten und linken Bilder der Bildpaare zum Erzeugen einer Karte von Zuordnungsvektoren, die digitale Hilfsdaten bilden,
b) einen Verfahrensschritt der Verschiebung (150) der Bildelemente in einem rechten Bild entsprechend den Bildelementen des linken Bilds oder umgekehrt in einem linken Bild entsprechend den Bildelementen des rechten Bilds;
c) einen Verfahrensschritt des Multiplexing (200) der Bildelemente der in Schritt b) erhaltenen rechten und linken Bilder zur Erzeugung eines kompatiblen Bilds, wobei das kompatible Bild über den analogen Weg übertragen wird und die digitalen Hilfsdaten über den digitalen Weg übertragen werden.

2. Verfahren nach Anspruch 1, dadurch gekennzeichnet, daß das Multiplexing der Bildelemente der Bilder des Bildpaares zu der Bewegungsgröße des lokalen oder globalen Inhalts des Bildpaares selbstanpassend ist.

3. Verfahren nach Anspruch 2, dadurch gekennzeichnet, daß das Multiplexing der Bildelemente der rechten und linken Bilder der stereoskopischen Bildpaare durch die räumliche, zeilenweise Verknüpfung eines anamorphotischen linken Bildrasters mit einem anamorphotischen rechten Bildraster zur Bildung eines Verbundrasters des übertragenen, kompatiblen Fernsehbildes bewirkt wird.

4. Verfahren nach Anspruch 2, dadurch gekennzeichnet, daß das Multiplexing der Bildelemente der rechten und linken Bilder der stereoskopischen Bildpaare durch die zeitliche Verknüpfung eines ungeradzahligen Rasters eines linken Bildes gefolgt von einem geradzahligen Raster eines rechten Bildes oder umgekehrt bewirkt wird, so daß jedes sukzessive Raster des übertragenen kompatiblen Fernsehbildes der Wechselfolge von jeweils einem von zwei Rastern jedes rechten und linken Bilds der Bildpaare der Folge entspricht.

5. Verfahren nach Anspruch 2, dadurch gekennzeichnet, daß das Multiplexing der Bildelemente der rechten und linken Bilder der stereoskopischen Bildpaare durch die zeitliche Verknüpfung von zwei sukzessiven Rastern eines linken Bildes gefolgt von zwei sukzessiven Rastern eines rechten Bildes bewirkt wird, so daß zwei sukzessive Raster des übertragenen kompatiblen Fernsehbildes abwechselnd zwei sukzessiven Rastern eines rechten Bildes oder eines linken Bildes der stereoskopischen Bildpaare der Folge entsprechen.

6. Verfahren nach Anspruch 5, dadurch gekennzeichnet, daß vor dem Multiplexing eine zusätzliche Verarbeitung in Form einer Umwandlung der zeitlichen Frequenz auf den geradzahligen Rastern der rechten Bilder der Folge von stereoskopischen Bildpaaren durchgeführt wird.

## Claims

1. A procedure for processing and transmitting a sequence of pairs of right and left stereoscopic television images (10, 20) by way of a transmission link comprising an analogue channel and a digital channel, in order to reconstitute a compatible image (30) or a three-dimensional image (40, 50) at the end of the said transmission link characterised in that it comprises:
a) a step of mapping (100) the right and left images of the pairs of images to produce a mapping vector map forming digital assistance data,
b) a step of shifting (150) the image elements in a right image, in accordance with the image elements of the left image, or vice-versa, in a left image in accordance with the image elements of the right image;
c) a multiplex transmission step (200) of the image elements of the right and left images obtained in step b) in order to produce a compatible image; the said compatible image being transmitted by the analogue channel and the digital assistance data being transmitted by the digital channel.

2. A procedure according to claim 1, characterised in that the multiplex transmission of the image elements of the images of the pair of images is self-adapting to the quantity of movement of the local or over-all content of the pair of images.

3. A procedure according to claim 2, characterised in that the multiplex transmission of the image elements of the right and left images of the pairs of stereoscopic images is carried out by spatially combining, line by line, a frame of an anamorphosed left image with a frame of an output anamorphosed right image to constitute a composite frame of the compatible video image transmitted.

4. A procedure according to claim 2, characterised in that the multiplex transmission of the image elements of the right and left images of the pairs of stereoscopic images is carried out by temporally combining an odd frame of a left image followed by an even frame of a right image, or vice-versa, so that each successive frame of the compatible video image transmitted corresponds to the alternation of one frame out of two respectively of each right and left image of the pairs of images of the sequence.

5. A procedure according to claim 2, characterised in that the multiplex transmission of the image elements of the right and left images of the pairs of stereoscopic images is carried out by temporally combining two successive frames of a left image followed by two successive frames of a right image so that the two successive frames of the compatible video images transmitted correspond in turn to two successive frames of a right image or of a left image of pairs of stereoscopic images of the sequence.

6. A procedure according to claim 5, characterised in that prior to the multiplex transmission an additional conversion processing of the temporal frequency is carried out on the even frames of the right images of the sequence of pairs of stereoscopic images.
